# EUROPEAN PATENT SPECIFICATION

(11) **EP 3 163 394 B1**
(45) Date of publication and mention of the grant of the patent: **12.02.2020**
(21) Application number: 16175431.2
(22) Date of filing: 21.06.2016
(51) Int. Cl.: G05D 1/00, G08G 5/00

(54) **METHOD AND DEVICE FOR CONTROLLING AN UNMANNED AERIAL VEHICLE**
VERFAHREN UND VORRICHTUNG ZUR STEUERUNG EINES UNBEMANNTEN LUFTFAHRZEUGS
PROCÉDÉ ET DISPOSITIF POUR COMMANDER UN VÉHICULE AÉRIEN SANS ÉQUIPAGE

(30) Priority: 30.10.2015 CN 201510727596
(43) Date of publication of application: 03.05.2017
(73) Proprietor: Xiaomi Inc., Beijing 100085 (CN)
(72) Inventor: YE, Hualin, Beijing 100085 (CN); LIU, Xin, Beijing 100085 (CN); XIA, Yongfeng, Beijing 100085 (CN)
(74) Representative: Cabinet Beau de Loménie

(56) References cited:
- US-A1- 2006 106 506
- US-A1- 2007 129 855
- US-A1- 2007 246 610
- US-B1- 6 377 875

## Description

### TECHNICAL FIELD

The present invention generally relates to Unmanned Aerial Vehicles (UAV) or drones in the security field, and more particularly to a method and a device for controlling an UAV.

### BACKGROUND

The market of consumer-oriented UAVs is getting more and more attention, and many traditional enterprises that manufacture consumer-oriented UAVs and information technology companies are investing economical and human resources in area of developing UAVs. Large numbers of ordinary users without relevant expertise begin operating UAVs to fly for purpose of entertainment and try to let them fly beyond their viewing distance. When the distance between an UAV and a controller of the UAV goes beyond human's viewing distance, it is hard for the users to accurately determine the flying environment of their UAV, which therefore causes a potential risk in the flight of the UAV.

US 6 377 875 discloses a remote control method for operating an unmanned air vehicle and an unmanned air vehicle for performing the remote control method, and the object of the document is to avoid the occurrence of an uncontrolled flight of a remotely controlled UAV in the case of loss of radio contact. In the event of an interruption of the radio contact between the control station and the UAV, then the UAV will fly on a substitute route calculated on-board the UAV using on-board equipment of the UAV, without active remote control intervention from the control station.

### SUMMARY

The invention is defined by independent claims 1 and 8.

In order to solve the problem of the related technologies, the present invention provides a method and a device for controlling an Unmanned Aerial Vehicle.

According to a first aspect of embodiments, the invention relates to a method for controlling an Unmanned Aerial Vehicle, comprising:
determining whether a distance between the Unmanned Aerial Vehicle (UAV) and the controller UAV goes beyond a predetermined distance;
detecting whether a link for collecting data from an external system of the UAV to the controller is normal, the external system being configured to detect a flying environment of the UAV; and
when the distance between the UAV and the controller goes beyond the predetermined distance and the link for collecting data from the external system to the controller is abnormal, controlling the UAV to enter into a return protection mode.

In a particular embodiment, said determining whether a distance between an Unmanned Aerial Vehicle (UAV) and a controller of the UAV goes beyond the predetermined distance comprises:
acquiring position coordinates of the UAV and position coordinates of the controller;
determining the distance between the UAV and the controller according to the position coordinates of the UAV and the position coordinates of the controller; and
deciding whether the distance between the UAV and the controller goes beyond the predetermined distance.

In a particular embodiment, said acquiring the position coordinates of the UAV and the position coordinates of the controller comprises:
acquiring the position coordinates of the UAV using a positioning system of the UAV; and
receiving the position coordinates of the controller sent from the controller, the position coordinates of the controller being acquired by the controller using a positioning system of the controller,
wherein the positioning system of the UAV and the positioning system of the controller comprise at least one of a GPS, a Base Station Positioning System and a Wireless Fidelity Positioning System.

In a particular embodiment, the predetermined distance is any one of a default value and a user-defined value.

In a particular embodiment, the external system comprises at least one of a camera, an infrared sensor system and a depth-of-field camera.

In a particular embodiment, said controlling the UAV to enter into a return protection mode comprises any one of:
controlling the UAV to fly back to a position where the controller is located; and
controlling the UAV to fly back to a predetermined position.

According to another implementation of the present invention, the method further comprises:
receiving an instruction of exiting the return protection mode; and
in response to the instruction of exiting the return protection mode, transferring control over the UAV to the controller.

According to a second aspect of the embodiments, the invention relates to a device for controlling an Unmanned Aerial Vehicle, comprising:
a determination module configured to determine whether a distance between the Unmanned Aerial Vehicle (UAV) and a controller of the UAV goes beyond a predetermined distance;
a detection module configured to detect whether a link for collecting data from an external system of the UAV to the controller is normal, the external system being configured to detect a flying environment of the UAV; and
a controlling module configured to, when the distance between the UAV and the controller goes beyond the predetermined distance and the link for collecting data from the external system to the controller is abnormal, control the UAV to enter into a return protection mode.

According to an implementation of the present invention, said determination module comprises:
an acquisition sub-module configured to acquire position coordinates of the UAV and position coordinates of the controller;
a determination sub-module configured to determine the distance between the UAV and the controller according to the position coordinates of the UAV and the position coordinates of the controller acquired by the acquisition sub-module; and
a deciding sub-module configured to decide whether the distance determined by the determination sub-module goes beyond the predetermined distance.

Further, said acquisition sub-module is configured to acquire the position coordinates of the UAV using a positioning system of the UAV; receive the position coordinates of the controller sent from the controller, the position coordinates of the controller being acquired by the controller using a positioning system of the controller, wherein the positioning system of the UAV and the positioning system of the controller comprise at least one of a GPS, a Base Station Positioning System and a Wireless Fidelity Positioning System.

In a particular embodiment, the predetermined distance is any one of a default value and a user-defined value.

In a particular embodiment, the external system comprises at least one of a camera, an infrared sensor system and a depth-of-field camera.

In a particular embodiment, said controlling module is configured to any one of control the UAV to fly back to a position where the controller is located; and control the UAV to fly back to a predetermined position.

According to another implementation of the present invention, the device further comprises:
a receiving module configured to receive an instruction of exiting the return protection mode, wherein
the controlling module is configured to, in response to the instruction of exiting the return protection mode, transfer control over the UAV to the controller.

According to a third aspect of the embodiments, the invention relates to a device for controlling an Unmanned Aerial Vehicle, comprising:
a processor; and
a memory for storing instructions executable by the processor;
wherein the processor is configured to:
   determine whether a distance between an Unmanned Aerial Vehicle (UAV) and a controller of the UAV goes beyond a predetermined distance;
   detect whether a link for collecting data from an external system of the UAV to the controller is normal, the external system being configured to detect a flying environment of the UAV; and
   when the distance between the UAV and the controller goes beyond the predetermined distance and the link for collecting data from the external system to the controller is abnormal, control the UAV to enter into a return protection mode.

In an exemplary embodiment, the steps of the above method for controlling an unmanned aerial vehicle are determined by computer program instructions.

Consequently, according to a fourth aspect, the invention also relates to a computer program for executing the steps of a method for controlling an unmanned aerial vehicle as defined above when this program is executed by a computer.

This program can use any programming language and take the form of source code, object code or a code intermediate between source code and object code, such as a partially compiled form, or any other desirable form.

According to a fifth aspect, the invention also relates to a computer-readable information medium containing instructions of a computer program as defined above.

The information medium can be any entity or device capable of storing the program. For example, the information medium can comprise storage means such as a ROM, for example a CD ROM or a microelectronic circuit ROM, or magnetic storage means, for example a diskette (floppy disk) or a hard disk. Alternatively, the information medium can be an integrated circuit in which the program is incorporated, the circuit being adapted to execute the method in question or to be used in its execution.

The technical solutions provided by the embodiments of the present invention may have the following beneficial effects:
When the distance between the UAV and the controller goes beyond the predetermined distance and the link for collecting data from the external system to the controller is abnormal, it is hard for the users to determine the flying environment of their UAV. In such case, controlling the UAV to enter into a return protection mode can protect the UAV, leading to a reduction of the possibility that the UAV collides with objects surrounding it and an improvement of the UAV safety.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for controlling an UAV according to an exemplary embodiment.
Fig. 2 is a flow chart showing another method for controlling an UAV according to an exemplary embodiment.
Fig. 3 is a structural block diagram of a device for controlling an UAV according to an exemplary embodiment.
Fig. 4 is a structural block diagram of another device for controlling an UAV according to an exemplary embodiment.
Fig. 5 is a structural block diagram of another device for controlling an UAV according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

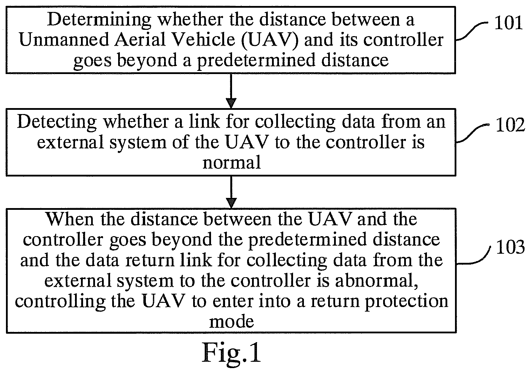

Fig. 1 is a flowchart showing a method for controlling an UAV according to an exemplary embodiment. The method is performed by an UAV, and may comprise the following steps as shown in Fig. 1.

In Step 101, it is determined whether a distance between an Unmanned Aerial Vehicle (UAV) and a controller of the UAV goes beyond (i.e. exceeds) human's viewing distance.

The controller may be a remote or a mobile terminal. In a particular example, the human's viewing distance is a predetermined distance. The human's viewing distance may be a default value set by the manufacture when the UAV is delivered. The human's viewing distance may also be a user-defined value set by the user using the remote or the mobile terminal during operation.

In Step 102, it is detected whether a link for collecting data from an external system of the UAV is normal.

The external system is configured to detect a flying environment of the UAV, and the link for collecting data is configured to send data detected by the external system about the flying environment to the controller, so that the user can check the flying environment of the UAV by using the controller. In a particular example, in step 102, the link for collecting data is normal if said link meets at least one predefined criteria: the data from the link for collecting data is receivable; or the handshaking information is acknowledged in time. In Step 103, when the distance between the UAV and the controller goes beyond the human's viewing distance and the link for collecting data from the external system to the controller is abnormal, the UAV is controlled to enter into a return protection mode.

The controlling the UAV to enter into a return protection mode comprises any one of: controlling the UAV to fly back to a position where the controller is located; and controlling the UAV to fly back to a predetermined position.

In a particular example, the predetermined position may be a set of predetermined position coordinates.

In this embodiment, in such case when the distance between the UAV and the controller goes beyond the human's viewing distance and the link for collecting data from the external system to the controller is abnormal, as it is hard for the users to determine the flying environment of their UAV, the UAV is controlled to enter into a return protection mode. This way the UAV can be protected, thus reducing the possibility of a collision of the UAV with objects surrounding it and improving the UAV safety.

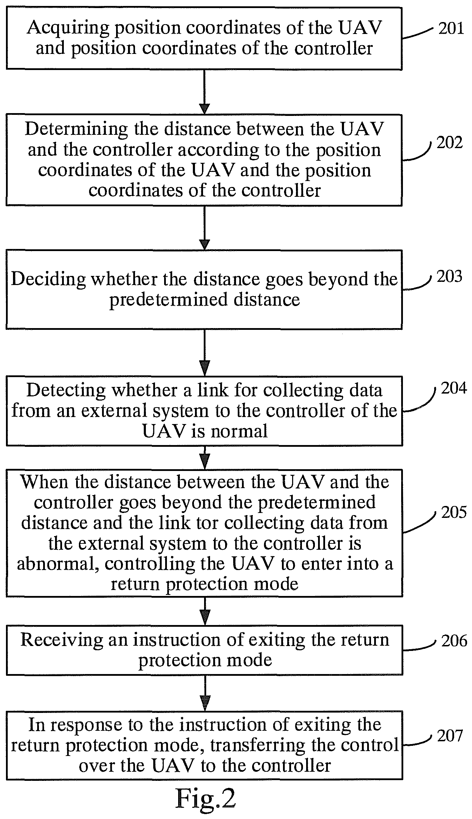

Fig. 2 is a flow chart showing another method for controlling an UAV according to an exemplary embodiment. The method is performed in an UAV, and in this embodiment, the external system may be a camera, an infrared sensor system or a depth-of-field camera (DOF Camera). As shown in Fig. 2, the method may comprise the following steps.

In Step 201, position coordinates of the UAV and position coordinates of the controller are acquired.

The controller may be a remote or a mobile terminal.

The step 201 may comprise:
acquiring the position coordinates of the UAV using a positioning system of the UAV;
receiving the position coordinates of the controller sent from the controller, the position coordinates of the controller being acquired by the controller using a positioning system of the controller.

The positioning systems may comprise at least one of a GPS, a Base Station Positioning System and a Wireless Fidelity Positioning System.

It should be noted that in this embodiment the position coordinates of the controller may be transmitted through a control channel between the controller and the UAV, which is also the channel for transmitting a control instruction from the controller to the UAV.

In Step 202, the distance between the UAV and the controller is determined according to the position coordinates of the UAV and the position coordinates of the controller.

For example, if the position coordinates of the UAV is (a1, b1), and the position coordinates of the controller is (a2, b2), the distance between the UAV and the controller may be calculated based on the formula of the distance between two points.

In Step 203, it is decided whether the distance between the UAV and the controller goes beyond the human's viewing distance.

The human's viewing distance may be a default value set by the manufacture when the UAV is delivered. The human's viewing distance may also be a user-defined value set by the user using the remote or the mobile terminal during operation.

By carrying out the Steps 201-203, it can be decided whether the distance between the UAV and the controller goes beyond the human's viewing distance.

In Step 204, it is detected whether a link for collecting data from an external system of the UAV is normal.

The external system is configured on the UAV to detect a flying environment of the UAV, and the link for collecting data is configured to send data detected by the external system about the flying environment to the controller, so that the user can check the flying environment of the UAV by using the controller. Preferably, the link for collecting data is independent from the link through which the controller sends the control instruction between the controller and the UAV, so even if the link for collecting data is abnormal, the transmission of the position coordinates of the controller may not be affected.

Further, the external system may comprise at least one of a camera, an infrared sensor system and a depth-of-field camera.

If the external system is a camera, the camera will capture images around the UAV. When the link for collecting data is normal, the captured images of the camera (that is the data about the flying environment) are transmitted to the mobile terminal of the user via said link, allowing the user to determine accurately the flying environment of the UAV.

If the external system is an infrared sensor system or a depth-of-field camera, the infrared sensor system or the depth-of-field camera may sense the relative position information between the UAV and the objects surrounding it (that is the data about the flying environment). When the link for collecting data is normal, the infrared sensor system or the depth-of-field camera may transmit the sensed relative position information to the mobile terminal of the user.

According to an implementation of this embodiment, the Step 204 may comprise:
periodically sending handshake information such as an acknowledgment to the controller via the link for collecting data; and
if response information sent from the controller is not received within a set length of time (i.e. time duration), then deciding that the link for collecting data is abnormal.

In Step 205, when the distance between the UAV and the controller goes beyond the human's viewing distance and the link for collecting data from the external system to the controller is abnormal, the UAV is controlled to enter into a return protection mode.

The controlling the UAV to enter into a return protection mode comprises any one of: controlling the UAV to fly back to a position where the controller is located and controlling the UAV to fly back to a predetermined position.

The method of this embodiment may further comprise:
when the distance between the UAV and the controller goes beyond the human's viewing distance while the link for collecting data from the external system to the controller is normal, or when the distance between the UAV and the controller is within the human's viewing distance (no matter whether the link for collecting data from the external system to the controller is normal or not), the UAV is controlled to fly normally.

Controlling the UAV to fly normally means giving control over the UAV to the controller, which may comprise:
receiving a flying instruction sent from the controller, which may be one or combination of turning left, turning right, diving, speeding up, speeding down and so on.
controlling the UAV to fly according to the received flying instruction.

When the UAV flies back within the range of the viewing distance, i.e., when the users find that they can see their UAV, they can exit the return protection mode manually using their controller, so as to transfer the control over the UAV to the controller, which then makes the UAV enter into a normal flying state. Therefore, the method of this embodiment may further comprise the following steps:
In Step 206, an instruction of exiting the return protection mode is received.
In Step 207, in response to the instruction of exiting the return protection mode, the control over the UAV is transferred to the controller (i.e. normal flying state).

It should be noted that in particular implementations, the time sequence of Steps 201-203 and Step 204 is not limited. Steps 201-203 and Step 204 may be carried out at the same time; or Steps 201-203 may be carried out firstly, and when the distance between the UAV and the controller of the UAV goes beyond the human's viewing distance, step 204 is then carried out; or Step 204 may be carried out firstly, and when the link for collecting data from the external system of the UAV is abnormal, steps 201-203 are then carried out.

In addition, the method may further comprise:
when the distance between the UAV and the controller is within the range of the viewing distance while the link for collecting data from the external system is abnormal, the UAV is controlled to fly within the range of the human's viewing distance. At this time, controlling the UAV to fly within the range of the human's viewing distance may further improve the flight safety of the UAV.

In particular implementations, the users can send instructions of forbidding flying beyond the viewing distance to their UAV by operating their controller in some scenarios. One scenario is that during the flight of the UAV, when the UAV flies back within the range of the viewing distance, i.e., when the users find their UAV in sight, due to the link for collecting data being abnormal, the users cannot know the flying environment of their UAV. Another scenario is when the UAV just takes off (operated by new users).

In such case, the method may further comprise:
receiving an instruction of forbidding flying beyond the viewing distance;

in response to the instruction of forbidding flying beyond the viewing distance, controlling the UAV to fly within the viewing distance.

The controlling the UAV to fly within the viewing distance may further comprise:
detecting the distance between the UAV and the controller; and
when the distance between the UAV and the controller reaches the viewing distance, controlling the UAV to fly toward the controller.

In such case when the distance between the UAV and the controller goes beyond the human's viewing distance and the link for collecting data from the external system to the controller is abnormal, as it is hard for the users to determine the flying environment of their UAV, the UAV is controlled to enter into a return protection mode. This way the UAV can be protected, thus reducing the possibility of a collision of the UAV whith objects surrounding it and improving the UAV safety.

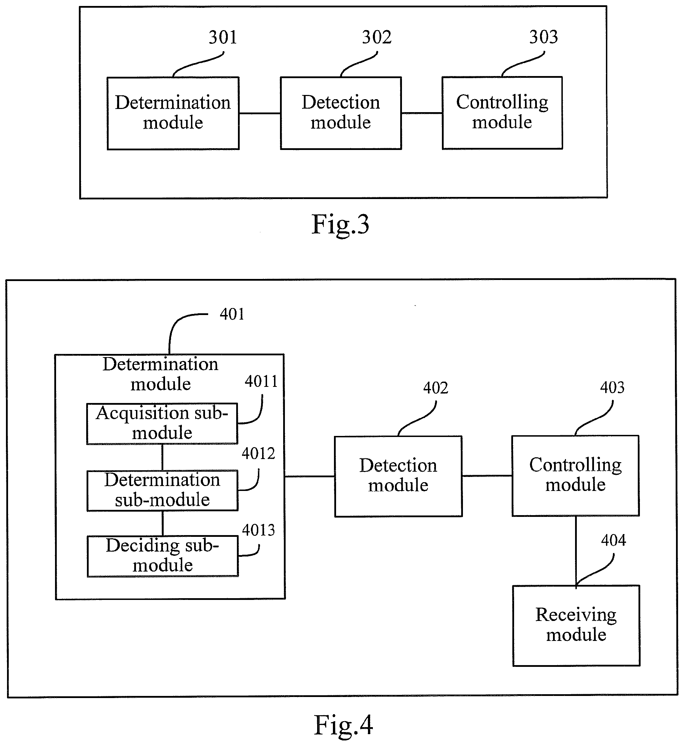

Fig. 3 is a structural block diagram of a device for controlling an UAV according to an exemplary embodiment. As shown in Fig. 3, the device may comprise a determination module 301, a detection module 302 and a controlling module 303.

The determination module 301 is configured to determine whether a distance between an Unmanned Aerial Vehicle (UAV) and a controller of the UAV goes beyond human's viewing distance.

The detection module 302 is configured to detect whether a link for collecting data from an external system of the UAV to the controller is normal.

The controlling module 303 is configured to, when the distance between the UAV and the controller goes beyond the human's viewing distance and the link for collecting data of the external system to the controller is abnormal, control the UAV to enter into a return protection mode.

The controller may be a remote or a mobile terminal. The human's viewing distance may be a default value set by the manufacture when the UAV is delivered The human's viewing distance may also be a user-defined value set by the user using the remote or the mobile terminal during operation.

The external system is configured to detect a flying environment of the UAV, and the link for collecting data is configured to send data detected by the external system about the flying environment to the controller, so that the user can check the flying environment of the UAV by using the controller.

In this embodiment, in such case when the distance between the UAV and the controller goes beyond the human's viewing distance and the link for collecting data from the external system to the controller is abnormal, as it is hard for the users to determine the flying environment of their UAV, the UAV is controlled to enter into a return protection mode. This way the UAV can be protected, thus reducing the possibility of a collision of the UAV with objects surrounding it and improving the UAV safety.

Fig. 4 is a structural block diagram of a device for controlling an UAV according to an exemplary embodiment. As shown in Fig. 4, the device may comprise a determination module 401, a detection module 402 and a controlling module 403.

The determination module 401 is configured to determine whether a distance between the Unmanned Aerial Vehicle (UAV) and a controller of the UAV goes beyond human's viewing distance.

The detection module 402 is configured to detect whether a link for collecting data from an external system of the UAV to the controller is normal.

The controlling module 403 is configured to, when the distance between the UAV and the controller goes beyond the human's viewing distance and the link for collecting data from the external system to the controller is abnormal, control the UAV to enter into a return protection mode.

The controller may be a remote or a mobile terminal. The human's viewing distance may be a default value set by the manufacture when the UAV is delivered. The human's viewing distance may also be a user-defined value set by the user using the remote or the mobile terminal during operation.

The external system is configured on the UAV to detect a flying environment of the UAV, and the link for collecting data is configured to send data detected by the external system about the flying environment to the controller, so that the user can check the flying environment of the UAV by using the controller. Preferably, the link for collecting data is independent from the link through which the controller sends the control instruction between the controller and the UAV, so even if the link for collecting data is abnormal, the transmission of the position coordinates of the controller may not be affected.

Further, the external system may comprise at least one of a camera, an infrared sensor system and a depth-of-field camera.

If the external system is a camera, the camera will capture images around the UAV. When the link for collecting data is normal, the captured images of the camera (that is the data about the flying environment) are transmitted to the mobile terminal of the user via the link for collecting data, allowing the user to determine accurately the flying environment of the UAV.

If the external system is an infrared sensor system or a depth-of-field camera, the infrared sensor system or the depth-of-field camera may sense the relative position information between the UAV and the objects surrounding it (that is the data about the flying environment). When the link for collecting data is normal, the infrared sensor system or the depth-of-field camera may transmit the sensed relative position information to the mobile terminal of the user.

Further, the controlling module 403 is configured to any one of control the UAV to fly back to a position where the controller is located; and control the UAV to fly back to a predetermined position.

Further, the determination module 401 comprises an acquisition sub-module 4011, a determination sub-module 4012, and a deciding sub-module 4013.

The acquisition sub-module 4011 is configured to acquire position coordinates of the UAV and position coordinates of the controller.

The determination sub-module 4012 is configured to determine the distance between the UAV and the controller according to the position coordinates of the UAV and the position coordinates of the controller acquired by the acquisition sub-module 4011.

The deciding sub-module 4013 is configured to decide whether the distance determined by the determination sub-module goes beyond the human's viewing distance.

Further, the acquisition sub-module 4011 is configured to acquire the position coordinates of the UAV using a positioning system of the UAV; receive the position coordinates of the controller sent from the controller, the position coordinates of the controller being acquired by the controller using a positioning system of the controller.

The positioning system of the UAV and the positioning system of the controller may comprise at least one of a GPS, a Base Station Positioning System and a Wireless Fidelity Positioning System.

It should be noted that in this embodiment the position coordinates of the controller may be transmitted through a control channel between the controller and the UAV, which is also the channel for transmitting a control instruction sent from the controller to the UAV.

According to an implementation of the embodiments of the present invention, the device may further comprise: a receiving module 404 configured to receive an instruction of exiting the return protection mode. The controlling module 403 is further configured to, in response to the instruction of exiting the return protection mode received by the receiving module 404, transfer control over the UAV to the controller.

It should be noted that in this embodiment, the controlling module 403 is further configured to, when the distance between the UAV and the controller goes beyond the human's viewing distance while the link for collecting data from the external system to the controller is normal, or when the distance between the UAV and the controller is within the human's viewing distance (no matter whether the link for collecting data from the external system to the controller is normal or not), control the UAV to fly normally, i.e., give the control over the UAV to the controller, and control the UAV to fly according to the flying instruction of the controller.

Further, the receiving module 404 is further configured to receive a flying instruction sent from the controller, which may be one or combination of turning left, turning right, diving, speeding up, speeding down and so on.

In addition, the controlling module 403 is further configured to control the UAV to fly according to the received flying instruction.

Furthermore, the controlling module 403 is further configured to, when the distance between the UAV and the controller is within the range of the viewing distance while the link for collecting data from the external system to the controller is abnormal, control the UAV to fly within the range of the human's viewing distance. At this time, controlling the UAV to fly within the range of the human's viewing distance may further improve the flight safety of the UAV.

In particular implementations, the users can send instructions of forbidding flying beyond the viewing distance to their UAV by operating their controller in some scenarios. One scenario is that during the flight of the UAV, when the UAV flies back within the range of the viewing distance, i.e., when the users find their UAV in sight, due to the link for collecting data being abnormal, the users cannot know the flying environment of their UAV. Another scenario is when the UAV just takes off (operated by new users). The receiving module is further configured to receive an instruction of forbidding flying beyond the viewing distance; and the controlling module is further configured to, in response to the instruction of forbidding flying beyond the viewing distance, control the UAV to fly within the viewing distance.

Further, the controlling module 403 is further configured to detect the distance between the UAV and the controller, and when the distance between the UAV and the controller reaches the viewing distance, control the UAV to fly toward the controller.

In this embodiment, in such case when the distance between the UAV and the controller goes beyond the human's viewing distance and the link for collecting data from the external system to the controller is abnormal, as it is hard for the users to determine the flying environment of their UAV, the UAV is controlled to enter into a return protection mode. This way the UAV can be protected, thus reducing the possibility of a collision of the UAV with objects surrounding it and improving the UAV safety.

The above described modules can each be implemented by hardware, or software, or a combination of hardware and software. When implemented in hardware, the modules may be implemented as one or more hardware modules, such as one or more application specific integrated circuits. When implemented in software, the modules may be implemented as one or more computer programs that are executed on one or more processors.

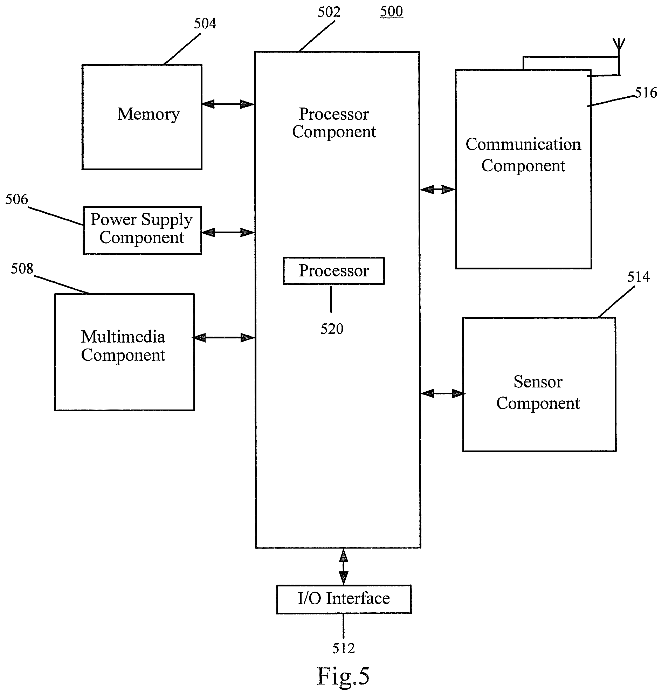

Fig. 5 is a structural block diagram of a device 500 for controlling an UAV according to an exemplary embodiment. For example, the device 500 may be an UAV or the like.

Referring to Fig. 5, the device 500 may comprise one or more of the following components: a processing component 502, a memory 504, a power supply component 506, a multimedia component 508, an input/output (I/O) interface 512, a sensor component 514, and a communication component 516.

The processing component 502 typically controls overall operations of the device 500, such as the operations associated with data communications, camera operations, and recording operations. The processing component 502 may comprise one or more processors 520 to execute instructions to perform all or part of the steps in the above described methods. Moreover, the processing component 502 may comprise one or more modules which facilitate the interaction between the processing component 502 and other components. For instance, the processing component 502 may comprise a multimedia module to facilitate the interaction between the multimedia component 508 and the processing component 502.

The memory 504 is configured to store various types of data to support the operation of the device 500. Examples of such data comprise instructions for any applications or methods operated on the device 500. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 506 provides power to various components of the device 500. The power supply component 506 may comprise a power management system, one or more power sources, and any other components associated with the generation, management, and distribution of power in the device 500.

The multimedia component 508 comprises at least one camera. When the device 500 is in an operation mode, such as a photographing mode or a video mode, the camera may receive external multimedia data. Each camera may be a fixed optical lens system or have focal length and optical zoom capability.

The I/O interface 512 provides an interface between the processing component 502 and peripheral interface modules, such as a keyboard, a click wheel, buttons, and the like.

The sensor component 514 comprises one or more sensors to provide status assessments of various aspects of the device 500. For instance, the sensor component 514 may detect an environment in which the device 500 is located. The sensor component 514 may comprise an infrared sensor configured to detect distances from the device 500 to objects surrounding the object 500. The sensor component 514 may also comprise a light sensor, such as a CMOS or CCD image sensor, for use in imaging applications. In some embodiments, the sensor component 514 may also comprise an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further comprises a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium comprising instructions, such as comprised in the memory 504, executable by the processor 520 in the device 500, for performing the above-described methods. For example, the non-transitory computer-readable storage medium may be a ROM, a RAM, a CD-ROM, a magnetic tape, a floppy disc, an optical data storage device, and the like.

There is also provided a non-transitory computer readable storage medium storing instructions, executable by a processor of an Unmanned Aerial Vehicle (UAV), enabling the UAV to perform a method for controlling the UAV, comprising:
determining whether a distance between an Unmanned Aerial Vehicle (UAV) and a controller of the UAV goes beyond human's viewing distance;
detecting whether a link for collecting data from an external system of the UAV to the controller is normal, the external system being configured to detect a flying environment of the UAV; and
when the distance between the UAV and the controller goes beyond the human's viewing distance and the link for collecting data from the external system to the controller is abnormal, controlling the UAV to enter into a return protection mode.

According to an implementation of the present invention, the determining whether a distance between an Unmanned Aerial Vehicle (UAV) and the controller of the UAV goes beyond human's viewing distance comprises:
acquiring position coordinates of the UAV and position coordinates of the controller;
determining the distance between the UAV and the controller according to the position coordinates of the UAV and the position coordinates of the controller; and
deciding whether the distance goes beyond the human's viewing distance.

Further, the acquiring the position coordinates of the UAV and the position coordinates of the controller comprises:
acquiring the position coordinates of the UAV using a positioning system of the UAV; and
receiving the position coordinates of the controller sent from the controller, the position coordinates of the controller being acquired by the controller using a positioning system of the controller,
wherein the positioning system of the UAV and the positioning system of the controller comprise at least one of a GPS, a Base Station Positioning System and a Wireless Fidelity Positioning System.

In a particular embodiment, the human's viewing distance is any one of a default value and a user-defined value.

In a particular embodiment, the external system comprises at least one of a camera, an infrared sensor system and a depth-of-field camera.

In a particular embodiment, controlling the UAV to enter into a return protection mode comprises any one of:
controlling the UAV to fly back to a position where the controller is located; and
controlling the UAV to fly back to a predetermined position.

According to another implementation of the present invention, the method further comprises:
receiving an instruction of exiting the return protection mode; and
in response to the instruction of exiting the return protection mode, transferring control over the UAV to the controller.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

## Claims

1. A method for controlling an unmanned aerial vehicle (UAV), comprising:
- determining (101, 203) whether a distance between the UAV and a controller of the UAV goes beyond a predetermined distance;
- detecting (102, 204) whether a link for sending data detected by an external system of the UAV to the controller is normal, the external system being configured to detect a flying environment of the UAV; and
- controlling (103, 205) the UAV to enter into a return protection mode, the method being **characterized in that** controlling (103, 205) the UAV to enter into the return protection mode is performed when the distance between the UAV and the controller goes beyond the predetermined distance and the link for sending data detected from the external system to the controller is abnormal.

2. The method of claim 1, wherein said determining (101, 203) whether a distance between the unmanned aerial vehicle (UAV) and the controller of the UAV goes beyond the predetermined distance comprises:
- acquiring (201) position coordinates of the UAV and position coordinates of the controller;
- determining (202) the distance between the UAV and the controller according to the position coordinates of the UAV and the position coordinates of the controller; and
- deciding (203) whether the distance between the UAV and the controller goes beyond the predetermined distance.

3. The method of claim 2, wherein said acquiring (201) the position coordinates of the UAV and the position coordinates of the controller comprises:
- acquiring the position coordinates of the UAV using a positioning system of the UAV; and
- receiving the position coordinates of the controller sent from the controller, the position coordinates of the controller being acquired by the controller using a positioning system of the controller,
wherein the positioning system of the UAV and the positioning system of the controller comprise at least one of a GPS, a Base Station Positioning System and a Wireless Fidelity Positioning System.

4. The method of any one of claims 1 to 3, wherein the predetermined distance is any one of a default value and a user-defined value.

5. The method of any one of claims 1 to 4, wherein the external system comprises at least one of a camera, an infrared sensor system and a depth-of-field camera.

6. The method of any of claims 1 to 5, wherein said controlling (103, 205) the UAV to enter into a return protection mode comprises any one of:
- controlling the UAV to fly back to a position where the controller is located, and
- controlling the UAV to fly back to a predetermined position.

7. The method of any one of claims 1 to 6, further comprising:
- receiving an instruction of exiting the return protection mode; and
- in response to the instruction of exiting the return protection mode, transferring control over the UAV to the controller.

8. A device for controlling an unmanned aerial vehicle (UAV), comprising:
- a determination module (301) configured to determine whether a distance between the UAV and a controller of the UAV goes beyond a predetermined distance;
- a detection module (302) configured to detect whether a link for sending data detected by an external system of the UAV to the controller is normal, the external system being configured to detect a flying environment of the UAV; and
- a controlling module (303) configured to control the UAV to enter into a return protection mode,
the device being **characterized in that** the controlling module (303) is configured to control the UAV to enter into the return protection mode when the distance between the UAV and the controller goes beyond the predetermined distance and the link for sending data detected from the external system to the controller is abnormal.

9. The device of claim 8, wherein said determination module (301) comprises:
- an acquisition sub-module (4011) configured to acquire position coordinates of the UAV and position coordinates of the controller;
- a determination sub-module (4012) configured to determine the distance between the UAV and the controller according to the position coordinates of the UAV and the position coordinates of the controller acquired by the acquisition sub-module; and
- a deciding sub-module (4012) configured to decide whether the distance between the UAV and the controller determined by the determination sub-module goes beyond the predetermined distance.

10. The device of claim 9, wherein said acquisition sub-module (4011) is configured to:
- acquire the position coordinates of the UAV using a positioning system of the UAV;
- receive the position coordinates of the controller sent from the controller, the position coordinates of the controller being acquired by the controller using a positioning system of the controller,
wherein the positioning system of the UAV and the positioning system of the controller comprise at least one of a GPS, a Base Station Positioning System and a Wireless Fidelity Positioning System.

11. The device of any one of claims 8 to 10, wherein the predetermined distance is any one of a default value and a user-defined value.

12. The device of any one of claims 8 to 11, wherein the external system comprises at least one of a camera, an infrared sensor system and a depth-of-field camera.

13. The device of any one of claims 8 to 12, wherein said controlling module is configured to at least one of control the UAV to fly back to a position where the controller is located, and control the UAV to fly back to a predetermined position.

14. The device of any one of claims 8 to 13, further comprising:
- a receiving module (404) configured to receive an instruction of exiting the return protection mode, wherein the controlling module is configured to, in response to the instruction of exiting the return protection mode, transfer control over the UAV to the controller.

15. A computer program including instructions for executing the step of a method according to any of claims 1 to 7 when said program is executed by a computer.

## Patentansprüche

1. Verfahren zur Steuerung eines unbemannten Luftfahrzeugs (UAV), umfassend:
- Bestimmen (101, 203), ob eine Entfernung zwischen dem UAV und einer Steuereinheit des UVA über eine vorher bestimmte Entfernung hinausgeht,
- Erfassen (102, 204), ob eine Verbindung zum Senden von Daten, die durch ein externes System des UAV erfasst werden, an die Steuereinheit normal ist, wobei das externe System dazu ausgestaltet ist, eine Flugumgebung des UAV zu erfassen, und
- Steuern (103, 205) des UAV, in einen Rückkehrschutzmodus zu gehen,
wobei das Verfahren **dadurch gekennzeichnet ist, dass** das Steuern (103, 205) des UAV, in den Rückkehrschutzmodus zu gehen, durchgeführt wird, wenn die Entfernung zwischen dem UAV und der Steuereinheit über die vorher bestimmte Entfernung hinausgeht und die Verbindung zum Senden von Daten, die von dem externen System erfasst werden, an die Steuereinheit anormal ist.

2. Verfahren nach Anspruch 1, wobei das Bestimmen (101, 203), ob eine Entfernung zwischen dem unbemannten Luftfahrzeug (UAV) und der Steuereinheit des UVA über die vorher bestimmte Entfernung hinausgeht, umfasst:
- Erlangen (201) von Positionskoordinaten des UAV und Positionskoordinaten der Steuereinheit,
- Bestimmen (202) der Entfernung zwischen dem UAV und der Steuereinheit gemäß den Positionskoordinaten des UAV und den Positionskoordinaten der Steuereinheit und
- Entscheiden (203), ob die Entfernung zwischen dem UAV und der Steuereinheit über die vorher bestimmte Entfernung hinausgeht.

3. Verfahren nach Anspruch 2, wobei das Erlangen (201) der Positionskoordinaten des UAV und der Positionskoordinaten der Steuereinheit umfasst:
- Erlangen der Positionskoordinaten des UAV unter Verwendung eines Positionierungssystems des UAV und
- Empfangen der Positionskoordinaten der Steuereinheit, die von der Steuereinheit gesendet werden, wobei die Positionskoordinaten der Steuereinheit durch die Steuereinheit unter Verwendung eines Positionierungssystems der Steuereinheit erlangt werden,
wobei das Positionierungssystem des UAV und das Positionierungssystem der Steuereinheit mindestens eines von einem GPS, einem Basisstation-Positionierungssystem und einem Wireless-Fidelity-Positionierungssystem umfassen.

4. Verfahren nach einem der Ansprüche 1 bis 3, wobei die vorher bestimmte Entfernung ein beliebiger von einem Standardwert und einem benutzerdefinierten Wert ist.

5. Verfahren nach einem der Ansprüche 1 bis 4, wobei das externe System mindestens eine bzw. eines von einer Kamera, einem Infrarot-Sensorsystem und einer Tiefenschärfekamera umfasst.

6. Verfahren nach einem der Ansprüche 1 bis 5, wobei das Steuern (103, 205) des UAV, in den Rückkehrschutzmodus zu gehen, ein beliebiges umfasst von:
- Steuern des UAV, zu einer Position, an der sich die Steuereinheit befindet, zurückzufliegen, und
- Steuern des UAV, zu einer vorher bestimmten Position zurückzufliegen.

7. Verfahren nach einem der Ansprüche 1 bis 6, ferner umfassend:
- Empfangen einer Anweisung, den Rückkehrschutzmodus zu verlassen, und
- als Reaktion auf die Anweisung, den Rückkehrschutzmodus zu verlassen, Übertragen der Kontrolle über das UAV an die Steuereinheit.

8. Vorrichtung zur Steuerung eines unbemannten Luftfahrzeugs (UAV), umfassend:
- ein Bestimmungsmodul (301), das dazu ausgestaltet ist, zu bestimmen, ob eine Entfernung zwischen dem UAV und einer Steuereinheit des UVA über eine vorher bestimmte Entfernung hinausgeht,
- ein Erfassungsmodul (302), das dazu ausgestaltet ist, zu erfassen, ob eine Verbindung zum Senden von Daten, die durch ein externes System des UAV erfasst werden, an die Steuereinheit normal ist, wobei das externe System dazu ausgestaltet ist, eine Flugumgebung des UAV zu erfassen, und
- ein Steuermodul (303), das dazu ausgestaltet ist, das UAV zu steuern, in einen Rückkehrschutzmodus zu gehen,
wobei die Vorrichtung **dadurch gekennzeichnet ist, dass** das Steuermodul (303) dazu ausgestaltet ist, das UAV zu steuern, in den Rückkehrschutzmodus zu gehen, wenn die Entfernung zwischen dem UAV und der Steuereinheit über die vorher bestimmte Entfernung hinausgeht und die Verbindung zum Senden von Daten, die von dem externen System erfasst werden, an die Steuereinheit anormal ist.

9. Vorrichtung nach Anspruch 8, wobei das Bestimmungsmodul (301) umfasst:
- ein Erlangungsteilmodul (4011), das dazu ausgestaltet ist, Positionskoordinaten des UAV und Positionskoordinaten der Steuereinheit zu erlangen,
- ein Bestimmungsteilmodul (4012), das dazu ausgestaltet ist, die Entfernung zwischen dem UAV und der Steuereinheit gemäß den Positionskoordinaten des UAV und den Positionskoordinaten der Steuereinheit, die von dem Erlangungsteilmodul erlangt werden, zu bestimmen, und
- ein Entscheidungsteilmodul (4012), das dazu ausgestaltet ist zu entscheiden, ob die Entfernung zwischen dem UAV und der Steuereinheit, die von dem Bestimmungsteilmodul bestimmt wurde, über die vorher bestimmte Entfernung hinausgeht.

10. Vorrichtung nach Anspruch 9, wobei das Erlangungsteilmodul (4011) ausgestaltet ist zum:
- Erlangen der Positionskoordinaten des UAV unter Verwendung eines Positionierungssystems des UAV,
- Empfangen der Positionskoordinaten der Steuereinheit, die von der Steuereinheit gesendet werden, wobei die Positionskoordinaten der Steuereinheit durch die Steuereinheit unter Verwendung eines Positionierungssystems der Steuereinheit erlangt werden,
wobei das Positionierungssystem des UAV und das Positionierungssystem der Steuereinheit mindestens eines von einem GPS, einem Basisstation-Positionierungssystem und einem Wireless-Fidelity-Positionierungssystem umfassen.

11. Vorrichtung nach einem der Ansprüche 8 bis 10, wobei die vorher bestimmte Entfernung ein beliebiger von einem Standardwert und einem benutzerdefinierten Wert ist.

12. Vorrichtung nach einem der Ansprüche 8 bis 11, wobei das externe System mindestens eine bzw. eines von einer Kamera, einem Infrarot-Sensorsystem und einer Tiefenschärfekamera umfasst.

13. Vorrichtung nach einem der Ansprüche 8 bis 12, wobei das Steuermodul zu mindestens einem von Steuern des UAV, zu einer Position, an der sich die Steuereinheit befindet, zurückzufliegen, und Steuern des UAV, zu einer vorher bestimmten Position zurückzufliegen, ausgestaltet ist.

14. Vorrichtung nach einem der Ansprüche 8 bis 13, ferner umfassend:
- ein Empfangsmodul (404), das dazu ausgestaltet ist, eine Anweisung zum Verlassen des Rückkehrschutzmodus zu empfangen, wobei das Steuermodul dazu ausgestaltet ist, als Reaktion auf die Anweisung zum Verlassen des Rückkehrschutzmodus die Kontrolle über das UAV an die Steuereinheit zu übertragen.

15. Computerprogramm, das Anweisungen zum Ausführen des Schritts eines Verfahrens nach einem der Ansprüche 1 bis 7, wenn das Programm von einem Computer ausgeführt wird, beinhaltet.

## Revendications

1. Procédé de commande d'un véhicule aérien sans pilote (UAV), comprenant les étapes ci-dessous consistant à :
- déterminer (101, 203) si une distance entre le véhicule UAV et un contrôleur du véhicule UAV dépasse une distance prédéterminée ;
- détecter (102, 204) si une liaison pour envoyer des données détectées par un système externe du véhicule UAV, au contrôleur, est normale, le système externe étant configuré de manière à détecter un environnement de vol du véhicule UAV ; et
- commander (103, 205) au véhicule UAV d'entrer dans un mode de protection de retour ;
le procédé étant **caractérisé en ce que** l'étape consistant à commander (103, 205) au véhicule UAV d'entrer en mode de protection de retour est mise en œuvre lorsque la distance entre le véhicule UAV et le contrôleur dépasse la distance prédéterminée et lorsque la liaison pour envoyer des données détectées à partir du système externe, au contrôleur, est anormale.

2. Procédé selon la revendication 1, dans lequel l'étape consistant à déterminer (101, 203) si une distance entre le véhicule aérien sans pilote (UAV) et le contrôleur du véhicule UAV dépasse la distance prédéterminée, comprend les étapes ci-dessous consistant à :
- acquérir (201) des coordonnées de position du véhicule UAV et des coordonnées de position du contrôleur ;
- déterminer (202) la distance entre le véhicule UAV et le contrôleur selon les coordonnées de position du véhicule UAV et les coordonnées de position du contrôleur ; et
- déterminer (203) si la distance entre le véhicule UAV et le contrôleur dépasse la distance prédéterminée.

3. Procédé selon la revendication 2, dans lequel ladite étape d'acquisition (201) des coordonnées de position du véhicule UAV et des coordonnées de position du contrôleur comprend les étapes ci-dessous consistant à :
- acquérir les coordonnées de position du véhicule UAV en faisant appel à un système de positionnement du véhicule UAV ; et
- recevoir les coordonnées de position du contrôleur, envoyées par le contrôleur, les coordonnées de position du contrôleur étant acquises par le contrôleur en faisant appel à un système de positionnement du contrôleur ;
dans lequel le système de positionnement du véhicule UAV et le système de positionnement du contrôleur comprennent au moins l'un parmi un système GPS, un système de positionnement de station de base et un système de positionnement de technologie Wi-Fi.

4. Procédé selon l'une quelconque des revendications 1 à 3, dans lequel la distance prédéterminée correspond à l'une quelconque parmi une valeur par défaut et une valeur définie par l'utilisateur.

5. Procédé selon l'une quelconque des revendications 1 à 4, dans lequel le système externe comprend au moins l'un des éléments parmi une caméra, un système de capteur infrarouge et une caméra de profondeur de champ.

6. Procédé selon l'une quelconque des revendications 1 à 5, dans lequel ladite étape consistant à commander (103, 205) au véhicule UAV d'entrer dans un mode de protection de retour comprend l'une quelconque des étapes ci-dessous consistant à :
- commander au véhicule UAV de revenir à une position où est situé le contrôleur ; et
- commander au véhicule UAV de revenir à une position prédéterminée.

7. Procédé selon l'une quelconque des revendications 1 à 6, comprenant en outre les étapes ci-dessous consistant à :
- recevoir une instruction visant à sortir du mode de protection de retour ; et
- en réponse à l'instruction visant à sortir du mode de protection de retour, transférer la commande du véhicule UAV au contrôleur.

8. Dispositif destiné à commander un véhicule aérien sans pilote (UAV), comprenant :
- un module de détermination (301) configuré de manière à déterminer si une distance entre le véhicule UAV et un contrôleur du véhicule UAV dépasse une distance prédéterminée ;
- un module de détection (302) configuré de manière à détecter si une liaison pour envoyer des données détectées par un système externe du véhicule UAV, au contrôleur, est normale, le système externe étant configuré de manière à détecter un environnement de vol du véhicule UAV ; et
- un module de commande (303) configuré de manière à commander au véhicule UAV d'entrer dans un mode de protection de retour ;
le dispositif étant **caractérisé en ce que** le module de commande (303) est configuré de manière à commander au véhicule UAV d'entrer en mode de protection de retour lorsque la distance entre le véhicule UAV et le contrôleur dépasse la distance prédéterminée et lorsque la liaison pour envoyer des données détectées à partir du système externe, au contrôleur, est anormale.

9. Dispositif selon la revendication 8, dans lequel ledit module de détermination (301) comprend :
- un sous-module d'acquisition (4011) configuré de manière à acquérir des coordonnées de position du véhicule UAV et des coordonnées de position du contrôleur ;
- un sous-module de détermination (4012) configuré de manière à déterminer la distance entre le véhicule UAV et le contrôleur selon les coordonnées de position du véhicule UAV et les coordonnées de position du contrôleur acquises par le sous-module d'acquisition ; et
- un sous-module de décision (4012) configuré de manière à déterminer si la distance entre le véhicule UAV et le contrôleur, déterminée par le sous-module de détermination, dépasse la distance prédéterminée.

10. Dispositif selon la revendication 9, dans lequel ledit sous-module d'acquisition (4011) est configuré de manière à :
- acquérir les coordonnées de position du véhicule UAV en faisant appel à un système de positionnement du véhicule UAV ; et
- recevoir les coordonnées de position du contrôleur, envoyées par le contrôleur, les coordonnées de position du contrôleur étant acquises par le contrôleur en faisant appel à un système de positionnement du contrôleur ;
dans lequel le système de positionnement du véhicule UAV et le système de positionnement du contrôleur comprennent au moins l'un parmi un système GPS, un système de positionnement de station de base et un système de positionnement de technologie Wi-Fi.

11. Dispositif selon l'une quelconque des revendications 8 à 10, dans lequel la distance prédéterminée correspond à l'une quelconque parmi une valeur par défaut et une valeur définie par l'utilisateur.

12. Dispositif selon l'une quelconque des revendications 8 à 11, dans lequel le système externe comprend au moins l'un des éléments parmi une caméra, un système de capteur infrarouge et une caméra de profondeur de champ.

13. Dispositif selon l'une quelconque des revendications 8 à 12, dans lequel ledit module de commande est configuré de manière à au moins l'un parmi commander au véhicule UAV de revenir à une position où est situé le contrôleur, et commander au véhicule UAV de revenir à une position prédéterminée.

14. Dispositif selon l'une quelconque des revendications 8 à 13, comprenant en outre :
- un module de réception (404) configuré de manière à recevoir une instruction visant à sortir du mode de protection de retour, dans lequel le module de commande est configuré de manière à, en réponse à l'instruction visant à sortir du mode de protection de retour, transférer la commande du véhicule UAV au contrôleur.

15. Programme informatique incluant des instructions pour exécuter l'étape d'un procédé selon l'une quelconque des revendications 1 à 7, lorsque ledit programme est exécuté par un ordinateur.
